# EUROPEAN PATENT APPLICATION

(11) **EP 3 342 632 A1**
(43) Date of publication of application: **04.07.2018**
(21) Application number: 17211158.5
(22) Date of filing: 29.12.2017
(51) Int. Cl.: B60L 11/18

(54) **VEHICLE CHARGING POINTS INFRASTRUCTURE MANAGEMENT AND ITS SYSTEM**

(30) Priority: 30.12.2016 ES 201631735
(71) Applicant: Atos Worldgrid SL, 39011 S/N Santander (ES)
(72) Inventor: Guinea Díaz, Juan, 28037 Madrid (ES); Recio Calzada, Carlos, 39011 SANTANDER (ES); Gonzalez Hernando, Jorge, 28037 Madrid (ES); Guerrero Vega, Zorayda, 39011 S/N SANTANDER (ES); Andres Lopez, Luis Maximiliano, 28806 Madrid (ES); Gonzalez del Rio, Jose Alberto, 39003 Santander (ES); Cid Rodriguez, Silvia Maria, 28223 Pozuelo de Alarcon (ES); Garcia Pereda, Antonio Javier, 28033 Madrid (ES); Navarro Matesanz, Roberto, 28037 Madrid (ES); Alonso Hernandez, David, 28037 Madrid (ES); Güemes Seoane, Celestino, 39011 Santander (ES); Rodriguez Jacue, Miguel Angel, 39011 S/N SANTANDER (ES); De Manuel De Briz, David, 28012 Madrid (ES); Garcia-Arista Delgado, Pablo, 19200 Azuqueca de Henares (ES); Perales Gorostiaga, Juan, 39479 Viono de Pielagos (ES); Estevez Pena, Julio, BARCELONA (ES); Diaz Trobo, Enrique, 28042 Madrid (ES); Alberto Monferrer, Marta, 39011 S/N SANTANDER (ES); López Bellón, Ignacio, 39011 S/N SANTANDER (ES); Parrilla Castaño, Fernando, 28037 Madrid (ES)
(74) Representative: Debay, Yves

(57) **Abstract**

The invention concerns a system for managing at least a charging points network comprising at least a management server, at least a database for storing information related to the charging points, of said network, providing energy to electric vehicles, at least a hardware and software architecture comprising set of modules for the management of users and the configuration of charging points or charging points park, at least a memory for storing data and a processor for executing a program stored in the memory to implement the functionalities of each module, said management system being characterized in that it provides at least an interface for a charging point operator in order to manage and configure its own charging points network and at least an user interface, said user interface comprising communication tools allowing the user to choose at least a type of connector and a type of charging point protocol, corresponding to a given vehicle, from the charging point operator infrastructure.

## Description

### FILED OF INVENTION

The present invention relates to the field of charging points infrastructure for electric vehicle and more precisely to a system for the management of such infrastructure.

### BACKGROUND OF THE INVENTION

Electric vehicles are nowadays are increasingly used and as the other vehicles, functioning by means of fossil fuels (meaning liquid fuels), electric vehicles need infrastructures, like stations, providing the energy required for their functioning. Although said stations are not numerous, the increasing number of electric vehicles will promote the installation of such stations or large banks or parks of electric vehicle service equipment (EVSE). EVSEs are commonly called "chargers", even though this is not technically precise.

Such bank of electric vehicle is disclosed in WO 2014/062909 which teaches a controller wired to charging points and controlling such points. However this document teaches only the constitution of a bank restricted to one operator and does not teach how to constitute and manage a plurality of network of banks belonging to several operators.

Even though large banks of EVSE are made available, and some or all of them might be occupied by an electric vehicle at a time, a user would like to be independent of a service provider (charging points operator) for charging its vehicle. Further each operator would like to be able to deliver electricity to any users even those having not a subscription.

Furthermore an operator would appreciate a system with flexibility enabling the installation of new chargers, for obtaining a park or bank of chargers, for facilitating the update of material and the configuration of the network.

### SUMMARY OF THE INVENTION

The present invention has as its object to obviate certain drawback of the prior art by offering a means for controlling in a flexibly way a charging points network or a charging park comprising a set of charging points.

This goal is achieved by a system for managing at least a charging points network comprising at least a management server, at least a database for storing information related to the charging points, of said network, providing energy to electric vehicles, at least a hardware and software architecture comprising at least a module «charging point» for configuring and/or monitoring and/or maintaining detailed asset inventory of the charging points, or at least a module «booking» comprising computer-executable instructions for handling the booking process of the charging point, said computer architecture (1) comprising at least a communication means (6a, 6b) for exchanging information with the charging point (4) and/or an external system and/or a user device or mobile, at least a memory for storing data and a processor for executing a program stored in the memory to implement the functionalities of each module, said management system being characterized in that the computer-executable code of «charging point» module (1a) provides at least an interface for a charging point operator (5a, 5b) in order to manage and configure its own charging points network and save it on the server of the management system in a memory part only accessible to the operator or to the users customer of the operator or the computer-executable instructions of the "booking" module provides at least a communication interface, with a user interface comprising tools for allowing the user to choose remotely at least a type of connector, corresponding to a given vehicle, and at least a communication with a charging point of the network of the operator (5a, 5b) infrastructure for receiving such information in the system and for proceeding to a booking in the network under the control of the management system.

According to another feature, the computer-executable instructions of the «booking» module, on the server, enables the functionalities of:
- locking a connector within a charging point, in order to be used only by a specific identification card and for the booking timeframe;
   or
- remotely locking a connector of a charging point, in order to be used only by the information contained on the user specific identification card for a booking timeframe, by means of a remote device or a remote communication interface, and then unlocking the chosen connector at the charging point by the identification card used to lock said connector;

According to another feature, computer-executable instructions of the «charging point» module control:
- the remote management of charging points through the execution of remote actions on said charging points, or
- the tracking of the charging points status changes or
- the monitoring of communications availability within said charging points.

According to another feature, the computer-executable instructions of the «charging point» module is providing easy management interface to allow CP grouping in charging parks and complete management of the CP connectors (or sockets) by establishing and memorizing for each park a list of CP identifiers (IDcp) and location of CP sites of a park and associated with each CP a list of connectors present on each CP of a park.

According to another feature, A system according to claim 1, characterized in that the charging point detail information generated during configuration comprise a general data section or «tab», this section comprises at least one or several of: the CP identity (IDcp), the Hostname or the name assigned to the CP that can be solved with a DNS (domain name server) system, the language chosen for the CP, the contact, location of the CP, the CP time zone (for time conversion) and data format supported by the CP; an address section or tab for the location of the CP.

According to another feature, the charging point detail information generated during configuration comprise a hardware (HW) parameter section or «tab» memorized in system memory which include the information about the CP manufacturer, the protocol used for the CP, the firmware reference, the model of the CP, the CP IP address.

According to another feature, the charging point detail information generated during configuration comprise an extra configuration section or «tab» memorized in system memory which includes the extra configuration flags that shape how the management system interacts with the CP (4) to help on defining different OCPP interpretations and behaviors with different CP manufacturers.

According to another feature, the charging point detail information generated during configuration comprise a connector section or «tab» memorized in the memory of the system and comprising the connector ID, the type of the connector, the maximum (allowed) voltage/amperage, the status, the recharge model (connector recharge mode), the identifier of the scheduled booking at the connector.

According to another feature, the charging point detail information generated during configuration enables the user to execute on demand remote configuration on the CP, and to choose the parameter to configure on a "Parameters" combo, while the management system waits the CP response, a waiting clock is displayed.

According to another feature, the parameters included in this tab may comprise, for example:
- HeartBeatlnterval,
- ConnectionTimeOut,
- ResetRetries,
- ChargePointld,
- ProximityContactRetries,
- ProximityLockRetries,
- BlinkRepeat,
- LigthIntensity,
- MeterValueSamplelnterval.

According to another feature, the architecture also comprises a module «administration» comprising computer-executable instructions to let the management system know that a Charge Point is still connected, a Charge Point send a Heartbeat.req PDU after a configurable time interval HeartBeatlnterval; Upon receipt of a Heartbeat.req PDU, the management system shall respond with a Heartbeat.conf; The response PDU shall contain the current time of the management system, which is recommended to be used by the Charge Point to synchronize its internal clock.

According to another feature, the computer-executable instructions of the «booking» module of the management system, request a booking by sending a ReserveNow.req PDU to a charging point with the option the management system specify a connector to be booked; and wait for a response of the charging point with a ReserveNow.conf PDU; if the reservationld in the request matches a booking in the charging point, then the charging point shall replace that booking with the new booking in the request; if the reservationld does not match any booking in the charging point, then the charging point shall return the status value "ACCEPTED" if it succeeds in booking a connector; the charging point shall return "OCCUPIED" if the charging point or the specified connector are occupied; the charging point shall also return "OCCUPIED" when the charging point or connector has been booked for the same or another idTag; the charging point shall return "FAULTED" if the charging point or the connector are in the faulted state.

According to another feature, the computer-executable instructions of the management system «booking» module, triggers the following behavior if the charging point accepts the booking request, then it shall refuse charging for all incoming idTags on the booked connector, except when the incoming idTag or the parent idTag match the idTag or parent idTag of the booking.

According to another feature, when ReserveConnectorZeroSupported parameter of the «charging point» module, is set to "TRUE" the charging point supports bookings on connector 0; if the connectorld in the booking request is 0, then the charging point shall not book a specific connector, but shall make sure that at any time during the validity of the booking, one connector remains available for the booked idTag.

According to another feature, according the computer-executable instructions of the «booking» module, a booking shall be terminated on the charging point when either (i) a transaction is started for the booked idTag or parent idTag and on the booked connector or any connector when the booked connectorld is 0, or (ii) when the time specified in expiryDate is reached, or (ii) when the Charge Point or connector are set to "FAULTED" or "UNAVAILABLE".

According to another feature the computer-executable instructions of the «booking» module, enables management system to request a charging point to unlock a connector when the charging point shall send an UnlockConnector.req PDU.

According to another feature, after a call of The EV drivers to the CPO help-desk, an operator could manually trigger the sending of an UnlockConnector.req to the Charge Point, forcing a new attempt to unlock the connector.

According to another feature, computer-executable instructions provide that upon receipt of an UnlockConnector.req PDU, the charging point shall respond with a UnlockConnector.conf PDU; the response PDU shall indicate whether the charging point was able to unlock its connector; or if there was a transaction in progress on the specific connector, then charging point shall finish the transaction first.

According to another feature, the architecture also comprises a module «administration» comprising computer-executable instructions for configuring applications and defining permissions along with their association with different roles supported by said architecture.

According to another feature, the architecture also comprises a module «energy» comprising computer-executable instructions for retrieving and monitoring the energy consumption.

According to another feature, the architecture also comprises a module «monitoring» for supervising the overall system, the communications, the transactions and the events.

According to another feature, the architecture also comprises a module «users» comprising computer-executable instructions for the management of the electric vehicle user.

According to another feature, the architecture also comprises a module «reports» comprising computer-executable instructions for producing reports related to the operation of the charging points.

According to another feature, the module «administration» comprises computer-executable instructions for:
- configuring the firmware to be sent to a set of charging points for upgrading, or
- providing a white list or list of RFID card to be sent to said set of charging points depending on the charging points configuration, or
- managing and configuring the way to group the charging points, or
- managing external charging points operators in order to delegate the charging point maintenance to the users, said external charging points operators users having access to a sub-set of the functionalities of the architecture.

According to another feature, the computer-executable instructions of the module «administration» (1f) shall send a SendLocalList.req PDU to send the list to a Charge Point. The SendLocalList.req PDU shall contain the type of update (full or differential) and the version number that the Charge Point must associate with the local authorization list after it has been updated; Upon receipt of a SendLocalList.req PDU, the management system shall wait for a response from the Charge Point with a SendLocalList.conf PDU; The response PDU shall indicate whether the Charge Point has accepted the update of the local authorization list. If the status is Failed or VersionMismatch and the updateType was Differential, then management system should retry sending the full local authorization list with updateType Full.

According to another feature, a module «energy» comprises computer-executable instructions for analyzing the charging points power network stability, load balancing and managing the charging transactions.

According to another feature, a module «monitoring» comprises computer-executable instructions for sending notifications to the actors or operators that can take corrective action if an unexpected situation occurred within the charging point infrastructure.

According to another feature, the module «monitoring » comprises computer-executable instructions for the geolocation of events, by means of at least a camera and a localization device, in order to provide to a charging point operator a visual and quick idea of the states of the charging points.

According to another feature, the module «monitoring» comprises computer-executable instructions for storing the events with a criticality parameter, in the memory of the architecture, and for taking into account the criticality and configuration of each event for suggesting corrective actions.

According to another feature, the configuration of each event, by the charging point operator, allows the execution of instant orders to perform some additional action over the charging points.

According to another feature, a module «users» comprises computer-executable instructions for creating, reading, updating and deleting the information of a user stored in a memory of the system and providing access control through an RFID card or similar to a charging point and managing the authorization process to be overcome by the user before charging the vehicle.

According to another feature, the module «users» comprises computer-executable instructions for delegation of the final authorization check to another external system, for example to a bank account, in case that the service of final authorization check of the operator is not available.

According to another feature, the module «users» comprises computer-executable instructions for providing a user group management and whitelist distribution to the charging points to save it in the charging points to reduce the amount of data to be transferred at the time of a transaction or operation.

According to another feature, a module «reports» comprises computer-executable instructions for exporting data, analyzing data and generating reports in order to provide tools to the operator for their organization and analysis.

According to another feature, the module «reports» comprises computer-executable instructions for providing access to different tools that allow for retrieving only the information interesting a specific group of users.

According to another feature, a module «administration» comprises computer-executable instructions for defining the internal events and the administrator's data management.

According to another feature, the module «administration» comprises computer-executable instructions for configuring attributes that affect the system behavior and customizing the final user interface.

According to another feature, the module «booking» comprises computer-executable instructions for allowing the charging points operator to switch from the status «direct» charging points to the status «bookable» charging points.

According to another feature, the module «booking» comprises computer-executable instructions for verifying that the bookings are not overlapped and that the user arrives at the expected timeframe of booking and, creating internal events in order to track the booking steps and any unexpected incident or abnormal situation.

According to another feature, the management system provides a set of web services with operations to exchange information with third party systems.

According to another feature, the set of services, provided by said management system, comprises:
- a charge point service to request any information or to send direct orders to the charging points;
- a RFID check service to confirm if a users are authorized to start charging transactions;
- a session report service to communicates to external systems the information related with the charging transactions flow;
- a booking report service to notify all the status changes of the booking,
- a whitelist service to distribute asynchronously a whitelist of RFID cards to all the charging points of the charging points operator network in background.

### BRIEF DESCRIPTION OF THE DRAWINGS

Other features and advantages of the present invention will appear more clearly upon reading the following description, given with reference to the appended drawings, in which:
- figure 1 is a schematic representation of the management system according one embodiment;
- figure 2 represents the role of the components of the hardware and software architecture of the management system according one embodiment;
- figure 3 is a schematic representation of the software layer and connection possibilities of the hardware and software architecture of the management system according one embodiment;
- figure 4 represents a display of a GIS (geographic information system) interface for the localization of charging points, according one embodiment;
- figure 5 represents a display of the detail charging point page of the module «charging point» of the architecture, either on the server or on the operator or on the mobile of the user, according one embodiment;
- figure 6 represents a display of the detail charging point page of the module «charging point» of the architecture, according another embodiment;
- figure 7 represents a display of the charge detail record provided by the module «energy» of the architecture, according one embodiment;
- figure 8 represents a display of a report provided by the module «reports» of the architecture, according one embodiment;
- figure 9 represents a display of a report of events provided by the module «reports» of the architecture, according one embodiment;
- figure 10 represents a display of a report of the latest events provided by the module «reports» of the architecture, according another embodiment;
- figures 11 and 12 represent the displays of a dashboard reporting the state of the infrastructure of a given charge points operator (CPO), according one embodiment;
- figure 13 represents a display of the interface of the module «users» of the architecture, according another embodiment;
- figure 14 represents a display of the interface of the management tables provided by the module «administration» of the architecture, according another embodiment;
- figure 15 represents a display of the general data section containing information about charging park according one embodiment;
- figure 16 represents a display of the address section providing the information about the address of a charging park or point, according one embodiment;
- figure 17 represents a display of the a hardware (HW) parameter section providing information about the charging point, in one embodiment;
- figure 18 represents a display of the connector section providing the information about the connectors used for a given charging point, according one embodiment;
- figures 19a and 19b represent the displays of the OCPP (open charging point protocol) operations that can be sent remotely to a given charging point, according one embodiment;
- figures 20a and 20b represent the displays of the OCPP (open charging point protocol) communication section providing the different options about the configuration of the protocol of a given charging point, according one embodiment;
- figures 21a and 21b represent the displays respectively of the booking section providing the information about the booking of a charging point and the events section reporting the latest events concerning charging points, according one embodiment;

### DETAILED DESCRIPTION

The present invention concerns a system for managing at least a network of at least a charging point operator (CPO), said network being constituted by a plurality of charging points for electric vehicles, located on a territory such for instance a country.

With said management system the charging point operator (CPO) can perform the remote operations.

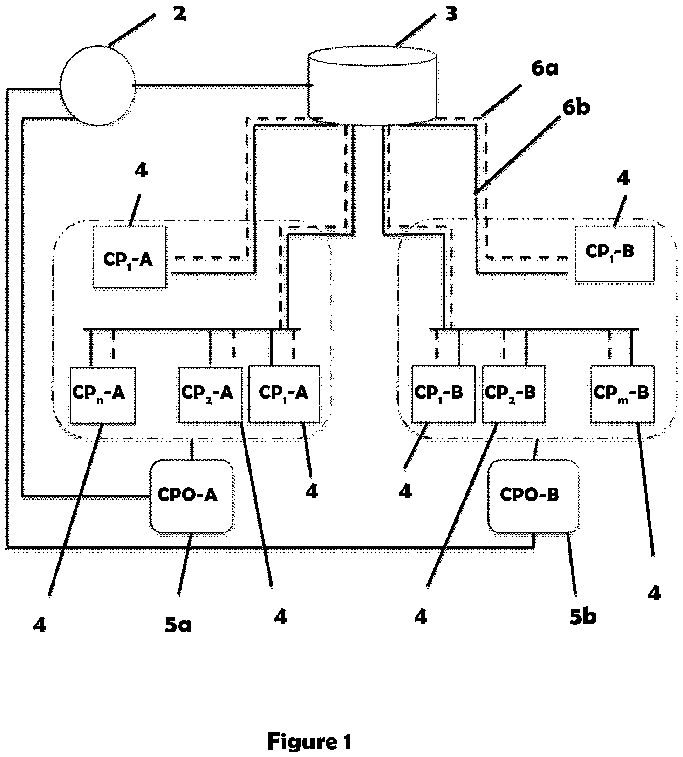

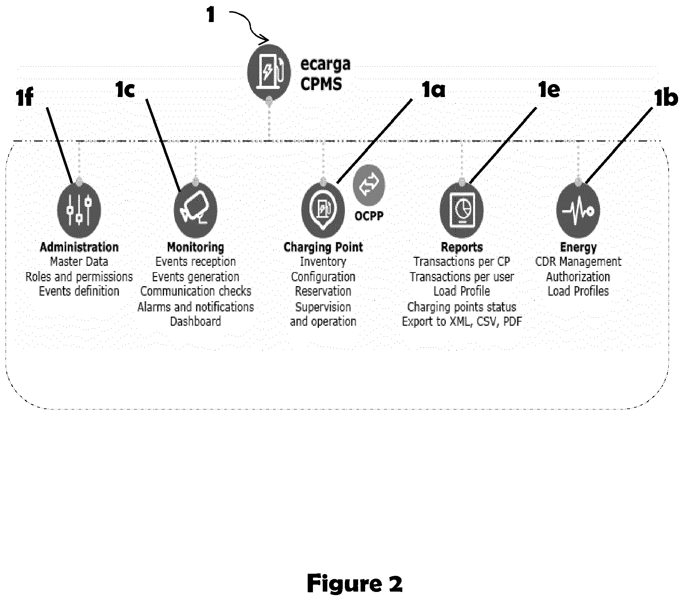

In some embodiments the system for managing at least a charging points (CPs) network comprising at least a management server (2, figure 1), at least a database (3) for storing information related to the charging points (4), to said network, providing energy to electric vehicles, at least a hardware and software architecture (1, figure 2) comprising at least a module «charging point» (1a) comprising computer-executable instructions for configuring and/or monitoring and/or maintaining detailed asset inventory of the charging points, a module «energy» (1b) for retrieving and monitoring the energy consumption, a module «monitoring» (1c) for supervising the overall system (for example high temperature, connection lock failure, ground failure, overload, etc.), the communications, the transactions and the events, a module «users» (not represented) for the management of the electric vehicle user (EVu), for example through a RFID, a module «reports» (1e) for producing reports related to the operation of the charging points (CPs), a module «administration» (1f) for configuring applications and defining authorizations along with their association with different roles supported by said system, or at least a module «booking» or «reservation» (not represented) comprising computer-executable instructions for handling the booking process of each charging point (CP), via SOAP (for Simple Object Access Protocol) web service, said computer architecture comprising at least a communication means (6a,6b) for exchanging information with the charging point (CP) and/or an external system and/or a user device or mobile, at least a memory for storing data and a processor for executing a program stored in the memory to implement the functionalities of each module, said management system being characterized in that the computer-executable code of «charging point» module (1a) provides at least an interface for a charging point operator (5a, 5b) in order to manage and configure its own charging points network and save it on the server of the management system in a memory part only accessible to the operator or to the users customer of the operator or the computer-executable instructions of the «booking» module provides at least a communication interface, with an user interface (for example a web service interface) comprising tools for allowing the user to choose remotely at least a type of connector corresponding to a given vehicle, and at least a communication with a charging point of the network of the operator (CPO) (5a, 5b, figure 1) infrastructure for receiving such information in the system and for proceeding to a booking in the network under the control of the management system.

For the booking or reservation of a charging point (4), a user can choose one of the functionalities provided by the computer-executable instructions of «booking» module, said computer-executable instructions enabling, on the server, the functionalities, for example, of:
- locking a connector within a charging point (4), in order to be used only by a specific identification card and for the booking timeframe;
   or
- remotely locking a connector of a charging point (4), in order to be used only by the information contained on the user specific identification card for a booking timeframe, by means of a remote device or a remote communication interface, and then unlocking the chosen connector at the charging point by the identification card used to lock said connector.

An administrator by means of the module «administration» (1f), can activate a set of functionalities for the proper functioning of a charging point (4) or a park of charging points. In some embodiment, said functionalities comprising:
- configuring the firmware to be sent to a set of charging points for upgrading by memorizing the firmware and a list of charging points and the communication links to be used for said update, or
- providing the whitelist or list of RFID cards to be sent to said set of charging points (4) depending on the charging points (4) configuration, or
- managing and configuring the way to group the charging points (4) by offering a graphical interface to enable an administrator to group selected charging points, or
- managing external charging points operators (5a, 5b) in order to delegate the charging point (4) maintenance to the users, said external charging points operators (5a, 5b) users having access to a sub-set of the functionalities of the architecture (1).

In some embodiment, the module "administration" (f) comprising the management of a master data tables. These tables being able for configuring applications and defining permissions along with their association with different roles supported by the architecture of the present invention.

In some embodiments, the module "administration" comprises further the functionalities of:
- At least one Master table's management
- Roles and permission definition,
- Events definition and search events: the system of the present invention manages all the events generated by the charge point network, providing a comprehensive dashboard, which provides information about the charging points' status in near real time (available, occupied, reserved, high temperature, connection lock failure, ground failure, overload, etc).

By whitelist, we means a list or register of entities, for example and without limitation a RFID card, that are being provided a particular privilege, service, mobility, access or recognition. Entities on the list will be accepted, approved and/or recognized.

By firmware, we mean a software or an integrated program in a hardware (for example: a computer, an application programming interface (API), a hard drive, a router, etc.) so as to allow said hardware to operate.

The management system is a complete solution for the management and control of charging point (CP) networks. With said management system a charging point operator (CPO) or a plurality of CPOs (5a, 5b) having connected their networks to the system can perform the remote operations of their CPs (4) including configuration, supervision, monitoring and control in real time, reducing the maintenance time and saving operational costs.

The management system allows the authorization and authentication of the end-user, the management of the charging transactions and the collection of the charge detail records (CDR) for billing purposes. Moreover, the CP booking is handled entirely by the management system.

The management system, also, manages all the events generated by each charging point network and transmitted to the management system, providing a comprehensive dashboard, which gives information about the CPs (4) states in real-time (available, occupied, reserved, etc).

The CPO (5a, 5b) can generate reports related to charging transactions, energy consumption, user charging patterns, etc.

The management system has an integration interface which publishes a set of services that offer information about the charging point network, such as get full details from a CP (4). An authorized third party system can access those interfaces.

The management system is a complete solution for the centralized management and remote control of charging points.

In some embodiments the management system can provide the following functionalities:
- flexible charging point configuration is provided by the module «charging point» for supporting different vendor Open Charging Point Protocol (OCPP) interpretations and versions memorized in the system by said module and for providing a coherent and unified view of the infrastructure;
- in addition, the management system comprise a module for supporting different communication configurations such as proxies, GPRS (General Packet Radio Service), CP with dynamic IP (Internet protocol), CP with fixed IP, hypertext transfert protocol (http) secure connection, different OCPPP contexts, etc.;
- a module supporting all the CP (4) maintenance operations needed by a CPO: firmware update, remote configuration change, communication monitoring, protocol messages tracking, event messages management, on demand remote operations, detailed reporting about infrastructure usage and status (example: charging transactions and CDR), and whitelist management;
- a module («charging point» module) providing, by means of its computer-executable instructions, easy management interface to allow CP (4) grouping in charging parks and complete management of the CP connectors (or sockets) by establishing and memorizing for each park a list of CPs (4) identifiers (IDcp) and location of CP sites of a park and associated with each CP a list of connectors present on each CP of a park;
- booking engine for realizing the following capabilities: expiration, authorization, optional charging point blocking, notification status change, cluster management, CP switching (from a bookable to no bookable according CP occupancy and booking mean), etc.;
- The web frontend supports localization;
- Different Web user profiles are considered. The Web page navigation options and fields are generated dynamically according to the profile. The current profiles are: Global Administrator, Aggregator, Operator, EV-user and External Company Operator;
- A module for managing the EVu, including the authorization processes needed to access to the charging infrastructure. The concepts involved by said module are: RFID cards, RFID groups, CP status and validation of users (valid and without active transactions).

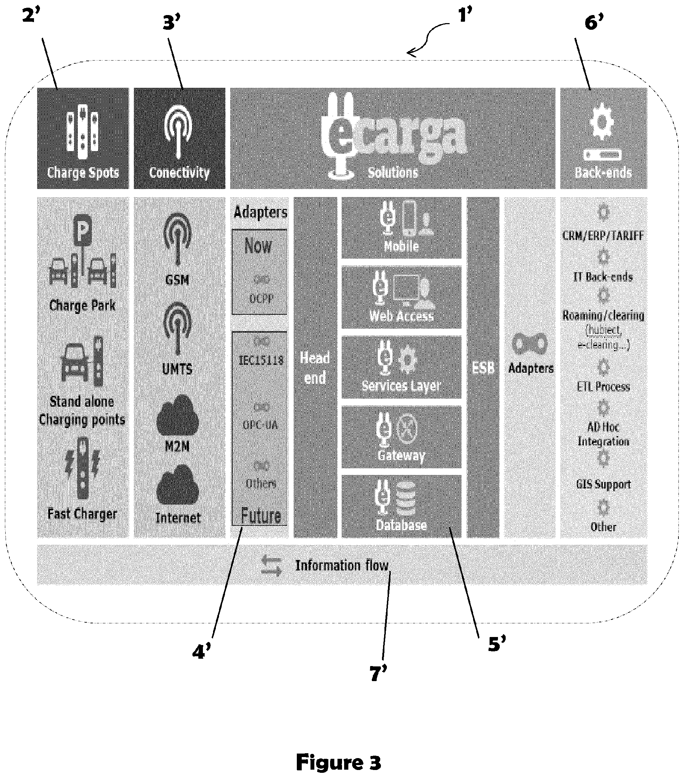

On one hand, the management system is able to integrate with different charging point vendors regardless of their OCPP protocol version and communications architecture (1', shown for example on figure 3). On the other hand, said management system allows the integration with third parties to exchange relevant information such as the CDR (charge detail records) for billing purposes.

Furthermore, the management system offers a service layer in order to provide information to the electric vehicle user, through either the web or the mobile application (App).

For example and without limitation, an architecture (software part) of the management system is depicted on figure 3. The architecture (1') can include several layers:
- a layer for managing the charge spots (2') comprising different charging configuration (for example: charge park, stand alone charging points, or fast charger),
- a layer for connectivity (3') comprising the means for communication between the system and the charging points infrastructure (for example: global system for mobile (GSM) or universal mobile telecommunication system (UMTS), a machine to machine (M2M) communication, or internet),
- an adapters layer (4') comprising different charging point operator's protocols (for example: such as IEC-15118),
- a tools layer (5') comprising tools to access services provided or managed by the charging points infrastructure (for example web access, database),
- a back-ends layer (6') for the integration of third party interface, comprising for example the GIS support for localization of the charging points.

The information flow between each layer of the architecture is obtained by means of communication means (7'), for example a message-oriented interfaces.

In some embodiments, the computer-executable instructions of the «charging point» module (1a) control:
- the remote management of charging points (4) through the execution of remote actions on said charging points (4), for example by sending to the CP locking command orders for a time range within a timeframe or receiving information from the CP concerning energy consumption, power network information, load balancing and charging transactions, or
- the tracking and memorizing of the charging points (4) status changes, for instance receiving the occupation or failure status of charging points, or
- the monitoring of communications availability within said charging points (4).

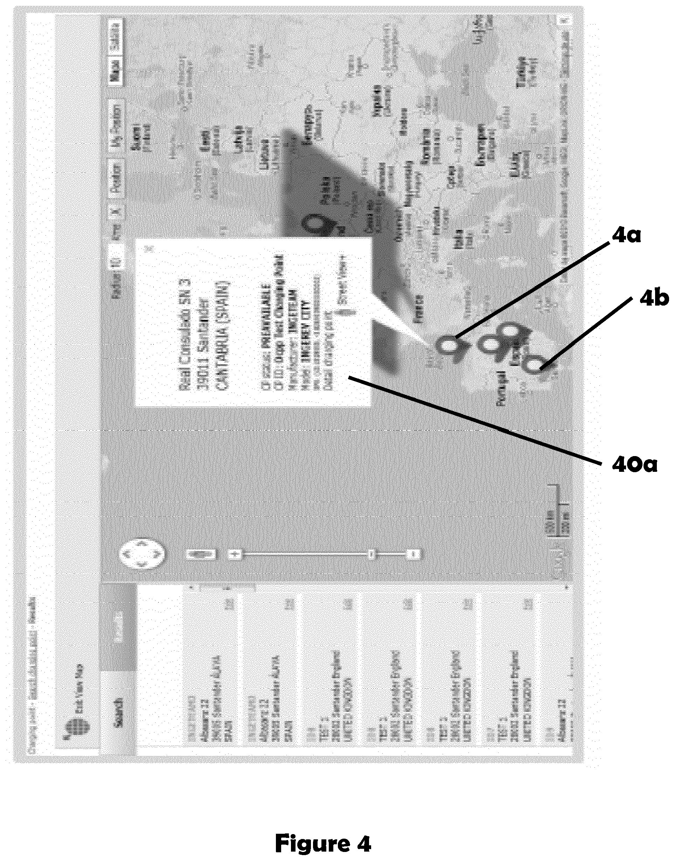

The module «charging point» (1a) is arranged to provide at least one or several of following actions:
- maintaining a detailed and up-to-date asset inventory of the charging point infrastructure;
- on demand execution of remote actions on groups of charging points according to different criteria;
- an integration with GIS (geographic information system) applications (see for example figure 4);
- the management of firmware update management and centralized distribution;
- to manage the CP bookings created by the end users;
- the interoperability in order to be compliant with different standard protocols (currently OCPP and other planned such as IEC-15118).

Figure 4 shows, for example, the display of a GIS interface. A user can search, with his mobile or Ipad device, for a charging point or the charging points park of a given operator in a specific region (for example in Europe). The charging points, corresponding to the request, are presented on a map in groups (4a, 4b) as blue circles and the address (40a) of a given set of charging points or park can be obtained by a zooming function included in the GIS. Once the user chooses a charging point or a charging points park, he can thus proceed to a booking.

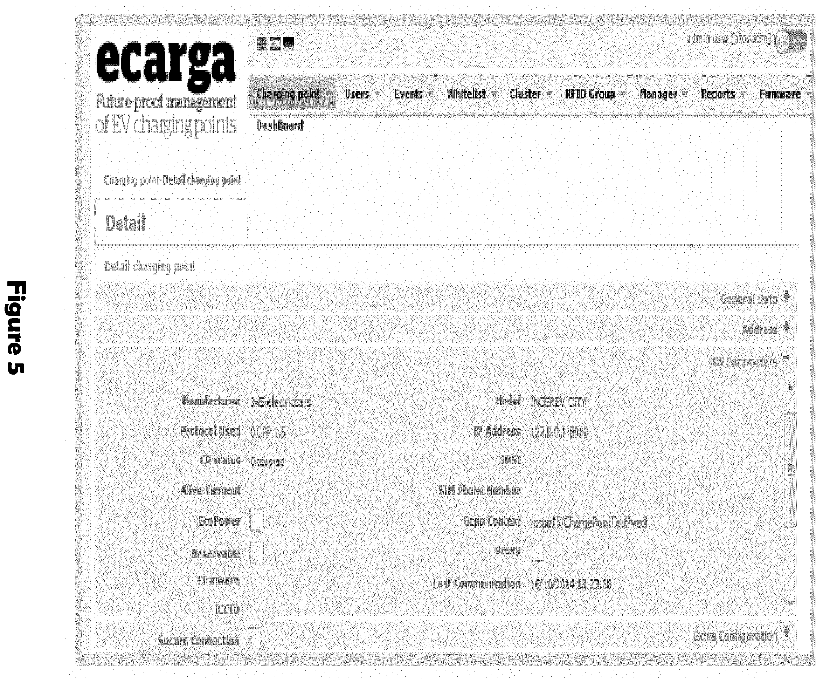

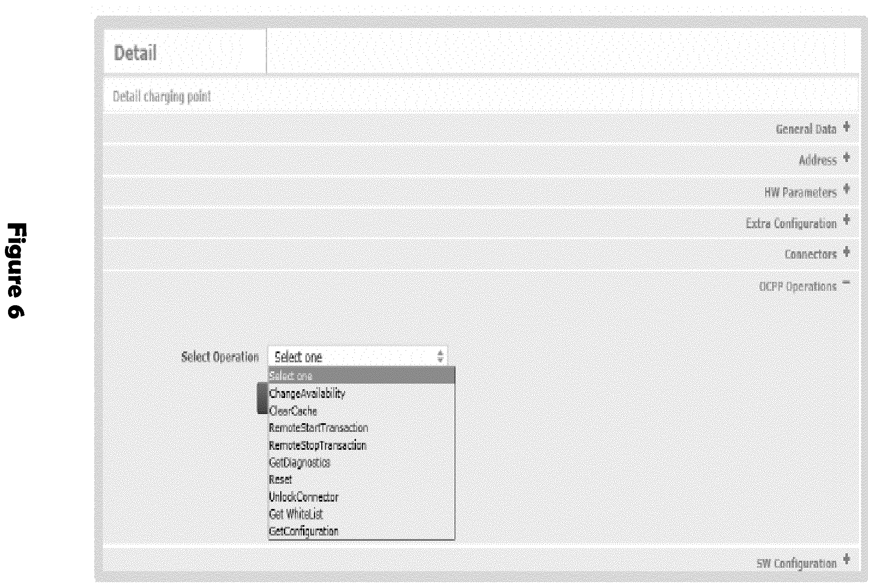

The detail of the charging point (4) information and operations managed by the management system is described in a charging point detail page as shown on figures 5 and 6.

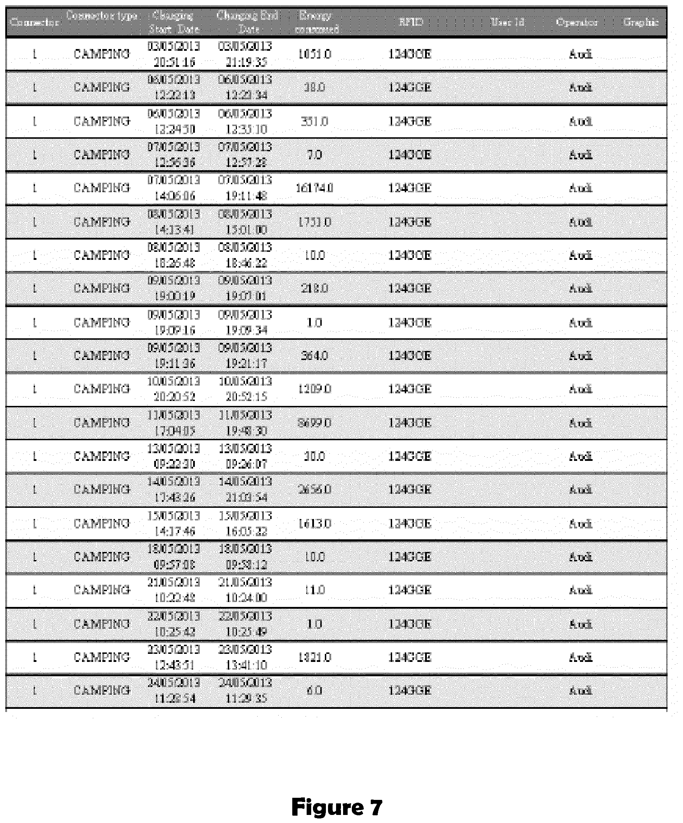

The charging point detail page, shown for example on figure 5 provides access to all the information on a CP: address (shown for example on figure 6), configuration, connectors of different types and association with determined list of vehicle regularly updated on each new vehicle presentation (shown for example on figure 7), health checks, bookings, OCPP messages exchanged and events.

Moreover, this page allows executing on demand operations on the CP for the following topics: OCPP Operations and software (SW) configuration.

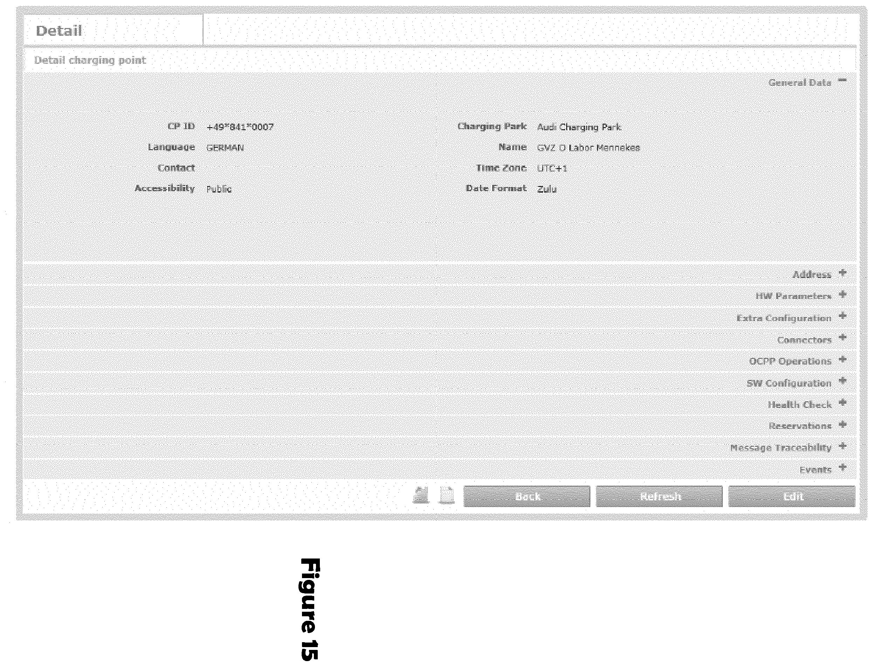

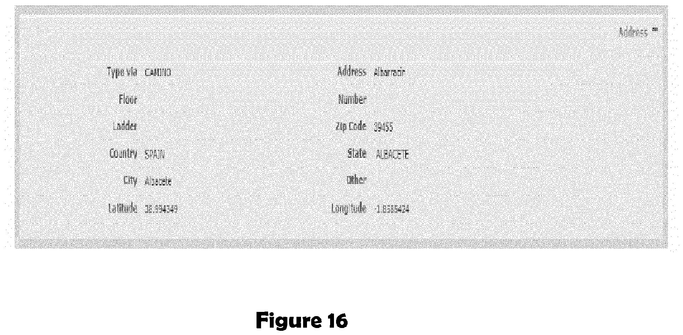

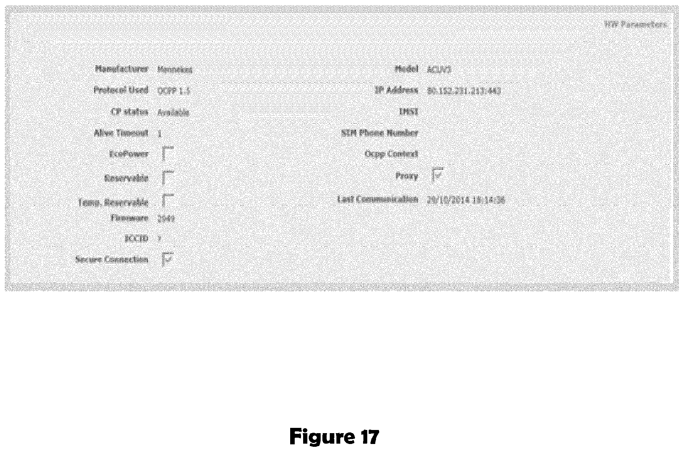

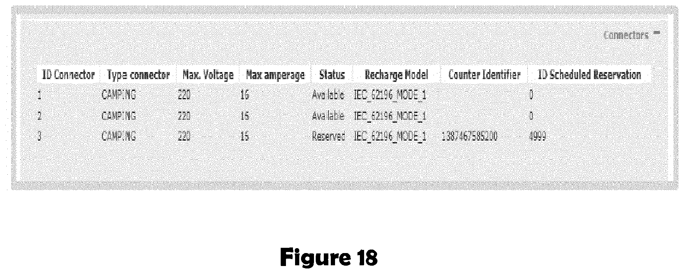

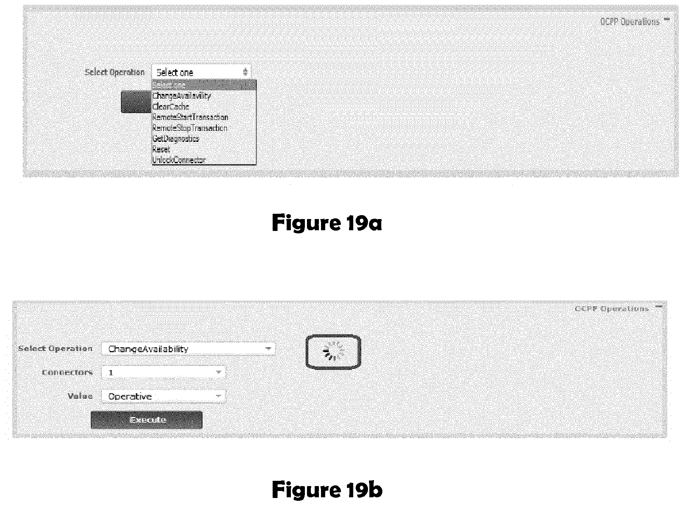

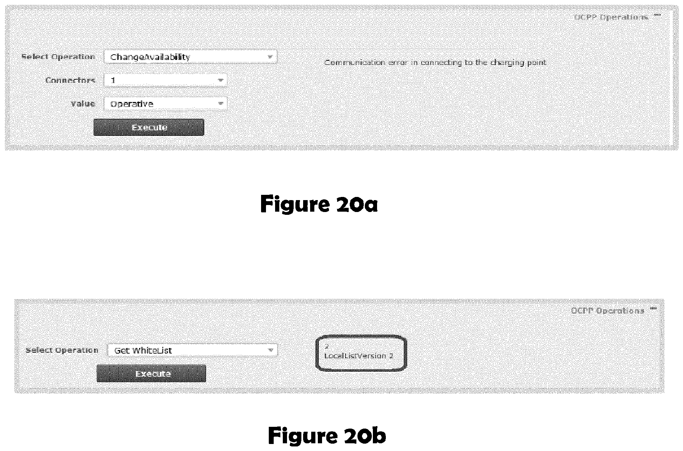

The charging point detail information may comprise:
- a general data section or «tab» (shown for example on figures 6 and 15): this section comprises the CP (4) identity (ID), the Hostname or the name assigned to the CP that can be solved with a DNS (domain name server) system, the language chosen for the CP, the contact, location of the CP, the CP time zone (for time conversion) and data format supported by the CP;
- an address section or tab (shown for example on figures 6 and 16) for the location of the CP;
- a hardware (HW) parameter section or «tab» (shown for example on figures 6 and 17): this section may include the information about the CP manufacturer, the protocol used for the CP, the firmware reference, the model of the CP, the CP IP address, etc.
- an extra configuration section or «tab»: this tab includes the extra configuration flags that shape how the management system interacts with the CP (4). This extra configuration provides a great flexibility at a CP level. These flags help on defining different OCPP interpretations and behaviors. The OCPP protocol does not provide detailed descriptions about how the CP should behave at some points. Thus, different CP behaviors are possible and correct. The management system handles all of them in order to provide a unified CP network view. This tab includes the different flags introduced in the management system to configure each CP behavior according to the real experience on the integration with different CP manufacturers.
- a connector section or «tab» (shown for example on figure 18): this tab may includes in the memory of the system the connector ID, the type of the connector, the maximum (allowed) voltage/amperage, the status, the recharge model (connector recharge mode), the identifier of the scheduled booking at the connector. This information shall be used to send messages to the CPs of a park and control their operation;
- an OCPP operations section or «tab» (shown for example on figures 19a and 19b): in this tab, the user can execute on demand remote operations on the CP. The user can choose the operation on the «Select Operation» combo. While the management system waits the CP response, a waiting clock is displayed and if there is some error, a message is shown as, for example, on figure 20a. If the operation executes successfully, the CP response is shown, as for example on figure 20b indicating a successful operation message received by OCPP through network and delivered by the remote CP on which an operation was requested.

The OCPP operations may comprise operations such as for example:
- ChangeAvailabilty;
- ClearCache;
- RemoteStartTransaction;
- RemoteStopTransaction;
- Reset;
- GetDiagnostics;
- UnclockConnector;

Each operation message sent to a CP needs specific parameters as input. The parameters meaning is the same as OCPP 1.2 or 1.5, depending on the CP protocol. Depending on the selected operation, the management system dynamically asks to the system memory for the input parameters needed.

The management system verifies the type, content and format of each parameter.

In some embodiments, the charging point informs the management system of its state and any relevant occurrences during normal operation. If there is nothing to report, the charging point will send at least a Heartbeat message at a predefined interval. Under normal circumstances this is just fine, but what if the management system has (whatever) reason to doubt the last known state? What can a management system do if a firmware update is in progress and the last status notification it received about it was much longer ago than could reasonably be expected? The same can be asked for the progress of a diagnostics request. The problem in these situations is not that the information needed isn't covered by existing messages. The problem is strictly a timing issue. The charging point has the information, but has no way of knowing that the management system would like an update.

The TriggerMessage.req makes it possible for the management system, to request the charging point, to send charging point-initiated messages. In the request the management system indicates which message it wishes to receive. For every such requested message the management system may optionally indicate to which connector this request applies. The requested message is leading: if the specified connector identity, connectorld, is not relevant to the message, it should be ignored. In such cases the requested message should still be sent.

Inversely, if the connectorld is relevant but absent, this should be interpreted as "for all allowed connectorld values". For example, a request for a statusNotification (request) for connectorld = 0 is a request for the status of the charging point. A request for a statusNotification without the connectorld is a request for multiple statusNotifications: the notification for the charge point itself and a notification for each of its connectors.

In some embodiments, the charging point shall first send the TriggerMessage response, before sending the requested message. In the TriggerMessage.conf (response) the charging point shall indicate whether it will send it or not, by returning "ACCEPTED" or "REJECTED". It is up to the charging point if it accepts or rejects the request to send. If the requested message is unknown or not implemented the charging point shall return "NOT IMPLEMENTED".

Messages that the charging point marks as "ACCEPTED" should be sent. The situation could occur that, between accepting the request and actually sending the requested message, that same message gets sent because of normal operations. In such cases the message just sent may be considered as complying with the request.

The TriggerMessage mechanism is not intended to retrieve historic data. The messages it triggers should only give current information. A MeterValues message triggered in this way for instance should return the most recent measurements for all measureables configured in configuration key MeterValuesSampledData. The messages StartTransaction and StopTransaction have been left out of this mechanism because they are not state related, but by their nature describe a transition.

In some embodiments, the management system can request a charging point to unlock a connector. To do so, the management system shall send, as message, an UnlockConnector.req PDU (Protocol Data Unit)

The purpose of this message is to help EV drivers that have problems unplugging their cable from the charging point in case of malfunction of the connector cable retention. When an EV driver calls the CPO help-desk, an operator could manually trigger the sending of an UnlockConnector.req to the charging point, forcing a new attempt to unlock the connector. Hopefully this time the connector unlocks and the EV driver can unplug the cable and drive away.

The UnlockConnector.req should not be used to remotely stop a running transaction, in this case one should use the remote stop transaction instead.

Upon receipt of an UnlockConnector.req PDU, the charging point shall respond with a UnlockConnector.conf PDU. The response PDU shall indicate whether the charging point was able to unlock its connector.

If there was a transaction in progress on the specific connector, then the charging point shall finish the transaction first as described in stop transaction.

UnlockConnector.req is intended only for unlocking the cable retention lock on the connector, not for unlocking a connector access door.

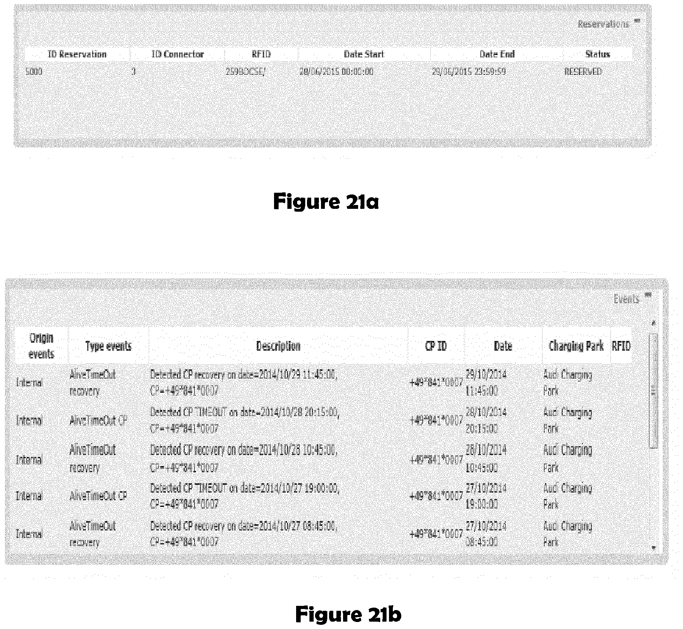

In some embodiments, the charging point detail information may, also, comprise:
- a software (SW) configuration section or «tab»: in this tab the user can execute on demand remote configuration on the CP. The user can choose the parameter to configure on a "Parameters" combo. While the management system waits the CP response, a waiting clock is displayed. The parameters included in this tab may comprise, for example:
   - HeartBeatlnterval,
   - ConnectionTimeOut,
   - ResetRetries,
   - ChargePointld,
   - ProximityContactRetries,
   - ProximityLockRetries,
   - BlinkRepeat,
   - Ligthlntensity,
   - MeterValueSamplelnterval.
   The parameters need the new configuration value as input. The configuration meaning is the same as OCPP 1.2 or 1.5, depending on the CP protocol. The management system uses the selected configuration to dynamically ask for the input parameters needed. The management system is arranged to verify the type, content and format of each parameter;
- a communication health check section or «tab» to show the health ? of the upward and downward communications. This tab also memorize and shows the timestamp of the latest messages exchanged;
- a booking section or «tab» (shown for example on figure 21a) is memorized in the system to enable the system to show all the information related to the bookings;
- a message traceability section or «tab» is memorized to show the latest OCPP messages exchanged with that CP. This tab includes detailed information about the OCPP exchange with the CP: name of the operation, request and response timestamps and request and response messages. If the user presses the xml link on the screen, the complete OCPP XML message is shown as a popup window;
- an events section or «tab» (shown for example on figure 21b) to show the latest events related to that CP.

In some embodiments, a server (2, fig 1) of the management system is connected to a database (3) relating to the charging points (4). The connection between the said charging points (CPs) and the database can be a wire (6b) connection (shown as continuous line on figure 1) or a wireless (6a) connection (shown as dashed line on figure 1), for example GPRS, wifi, etc.

The network may comprise several charging points operators (CPO). For example and without limitation, the network may comprise a CPO-A (5a) and a CPO-B (5b), each charging points operator, CPO-A and CPO-B, being responsible for the management of a CP (CP-A or CP-B) or a charging points park composed by several charging points, for example CP₁-A to CPₙ-A for the CPO-A and CP₁-B to CPₘ-A. The charging points, the charging points park or the charging points operators are not necessarily located in the same geographical region. For example and without limitation, the CPO-A and its charging points infrastructure can be located in France whereas the CPO-B and its charging points infrastructure can be located in Spain. Each CPO (A and B) has an interface, provided by the management system, that can be used to access to the management server (2) of the management system in order to configure its own charging points or park. The configuration consists of giving the information about each CP (4) of the charging points infrastructure. The information may comprise, for example, the manufacturer of the CP (4), the type of connectors, the protocol and also the communication means for monitoring the CP (4) or the CPs park. Each CPO (A or B) can only have access or configure its own charging points network. The server (2) checks, before any modification of the data memorized and related to a given CP (4) or given CPO (5a, 5b), that the modification order exactly concerns an equipment of the network of said CP by for example checking the CPO identifier with the CP identifier which should include all or part of CPO identifier or checking a list of correspondence between CP and CPO identifiers, even if the access of each operator are secure by encryption or identification key. The server (2) of the management system, by means of the module «monitoring», collects the data given by the CPO (5a, 5b) and stores them. The server (2) comprises all the protocol to be used for the CPs. The CPO (5a, 5b) can choose and update several connectors or protocols of charging points. The list of connectors and protocol associated to each CP (4) of each CP park can be used by the electric vehicles users, by means of an interface, depending on the characteristics of their vehicles.

In some embodiments, the functionalities of the module «energy» (1b) comprise analyzing the charging points power network stability, load balancing and managing the charging transactions.

The management of the charging transactions comprises authorizing, controlling, storing and monitoring of the transactions, their charging time and the energy consumed to provide real-time information to the charging point operator (5a, 5b).

The module «energy» (1b) can also provide:
- the management of charge detail record (CDR), storage and integration with other IT-Backend systems (customer relationship management (CRM), billing...);
- a vehicle-to-grid (V2G) support: capability to integrate with distribution management systems (DMS) to help on assuring the grid stability.

By vehicle-to-grid system, we mean a system in which plug-in electric vehicles, such as electric cars (BEVs) and plug-in hybrids (PHEVs), communicate with the power grid to sell demand response services by either delivering electricity into the grid or by throttling their charging rate.

A charge detail record (shown for example on figure 7) can contain information about the type connector used, the energy consumption, the start date and end date of the charging process, the RFID number used to access to the charging point, the user identity (optional), the operator (5a, 5b, figure 1) or the location of the charging point (4, figure 1).

In some embodiments, the functionalities of the module «monitoring» (1c) comprise sending notifications to the actors or operators (5a, 5b) that can take corrective action if an unexpected situation occurred within the charging point (4) infrastructure.

The functionalities of the module «monitoring» (1c) also comprise:
- the geolocation of events, by means of at least a camera and a localization device, in order to provide to a charging point operator a visual and quick idea of the states of the charging points;
- storing the events with a criticality parameter (for example high temperature, connection lock failure, ground failure, overload, etc.), in the memory of the architecture (1), by taking into account the criticality and configuration of each event for suggesting corrective actions stored in a database;
- the configuration of each event, by the charging point operator, allows the execution of instant orders to perform some additional action over the charging points.

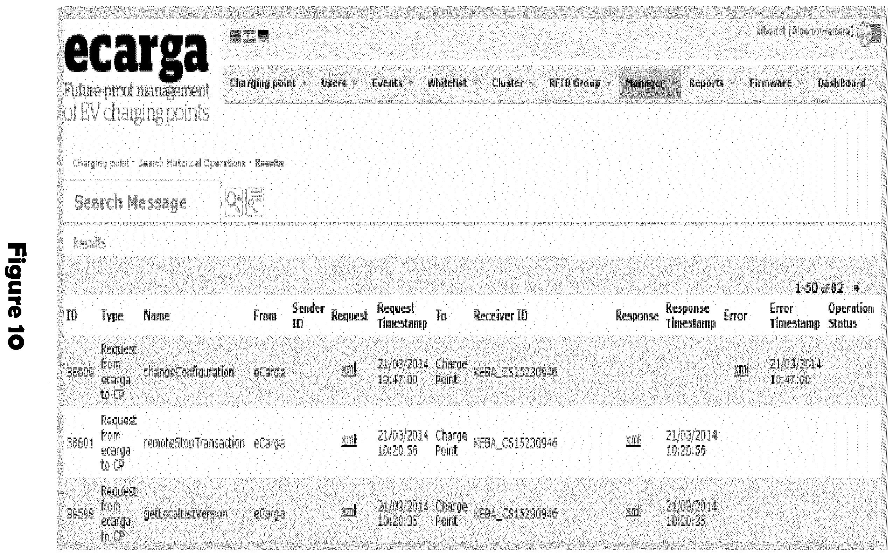

The management system also generates internal events in order to notify of unexpected situations. For example and without limitation: receive a start transaction message from an unavailable CP (4). The latest events related to a CP (4) are shown at the charging point detail page (see figure 10).

The management system implements a supervision process that verifies the CP (4) status based on the upwards and downwards communications with the CPs network. These communications are checked in background on a periodic basis. The periodicity and the time buffers considered within those verifications are configurable by the CPO (5a, 5b).

The management system makes sure that each communication check is done at least one time a day for each CP (4).

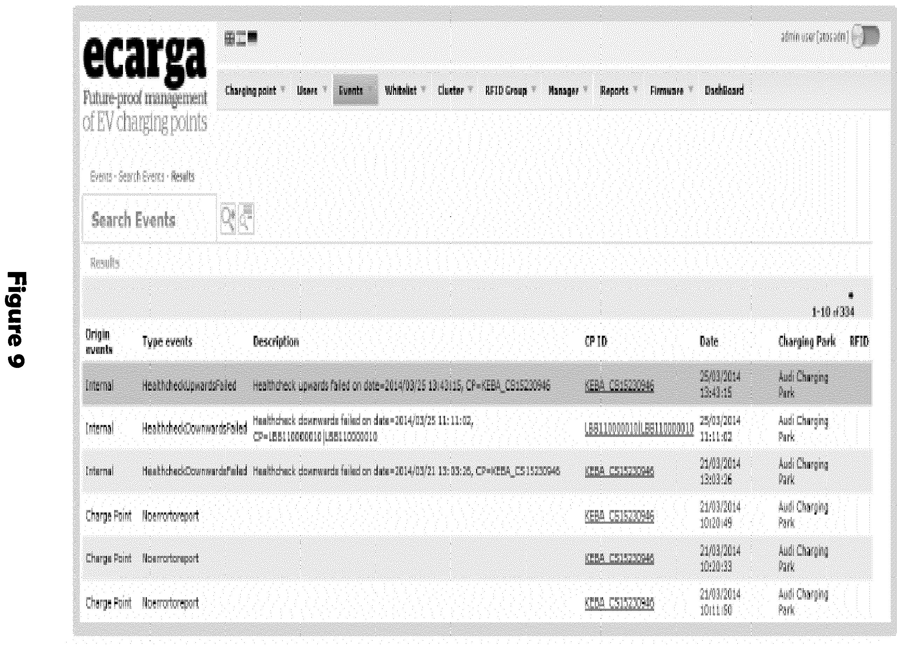

The events (shown for example on figure 9) are generated when any CP (4) communication change is verified, in order to notify such status change to the CPO (5a, 5b). If any of the communication does not work, the CP (4) is considered «KO» as a global communication status. On the other hand, if both communications (upwards and downwards) are successful, the CP communication status is «OK».

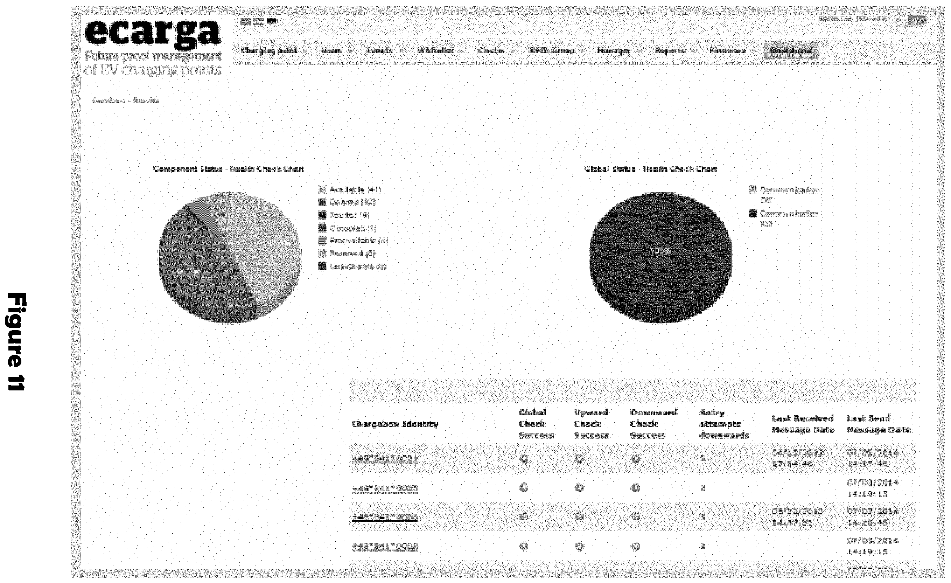

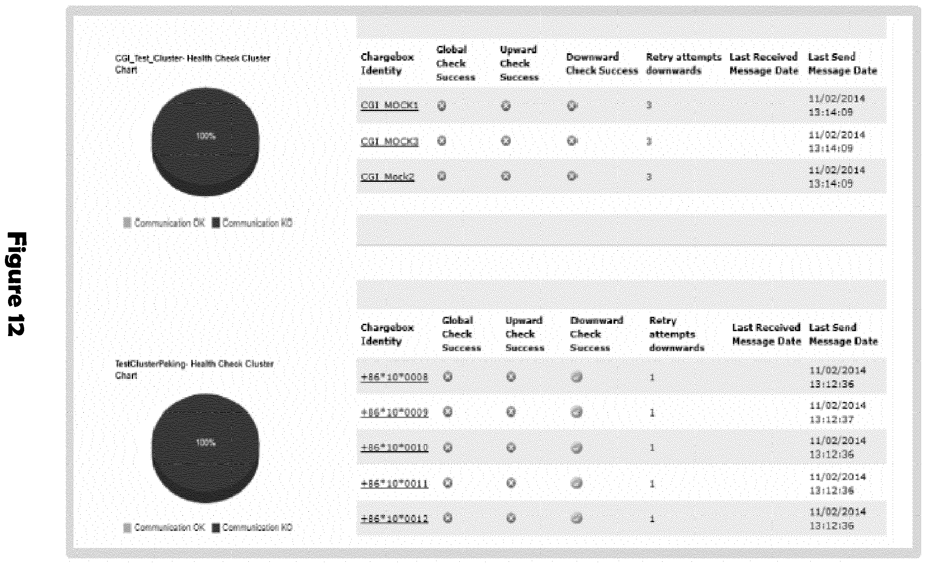

The CPO (5a, 5b) can see, for example, at a dashboard (shown for example on figures 11 and 12), in a visual manner, an overview of the CPs status of its infrastructure.

The module «users» is an optional module for the management of the electric vehicle user (EVu), including the authorization process needed to access to the charging infrastructure, their status within the system and the validation of those users, etc.

In some embodiments, the features or functionalities of the module «users» comprise:
- users management that includes the classical operations over their information: creating, reading, updating and deleting the information of a user;
- providing access control through an RFID (Radiofrequency identification) card or similar and the authorization process to overcome before charging the vehicle;
- the delegation of the final authorization check to another external system (for roaming purposes), for example a bank account, in case that the service of final authorization check of the operator is not available;
- user group management (for example fleets) and whitelist distribution to the charging points to reduce the amount of data transferred.

If, during the control of the access to a given charging point, the user does not have a RFID card or the RFID card does not work properly due to a default, a credit card can be used for the transaction in replacement of said RFID card.

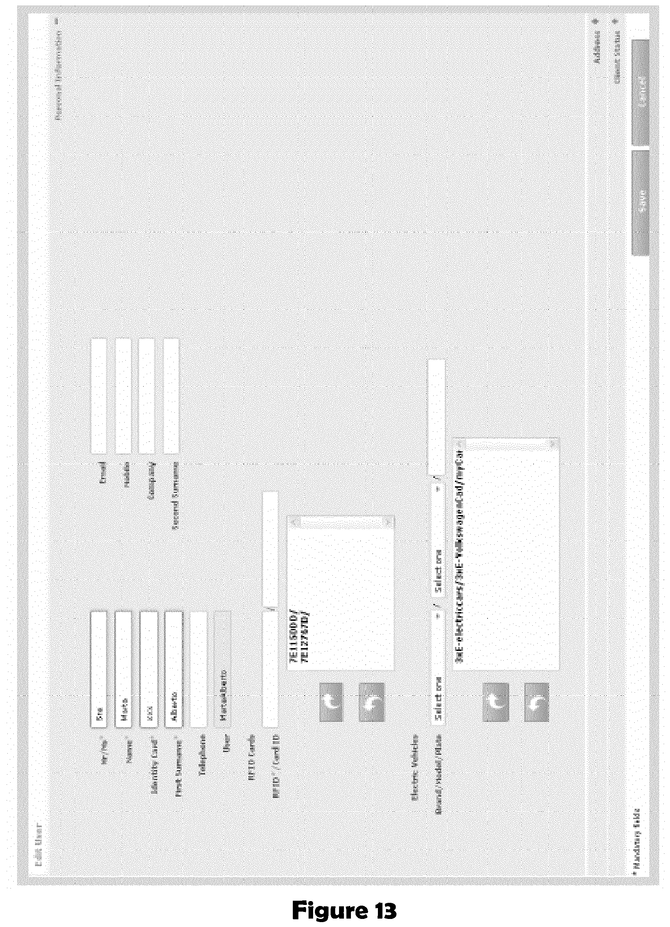

Figure 13 shows, en example of an interface for users. The interface includes boxes to fill with, for example, a user name, birth date, etc.

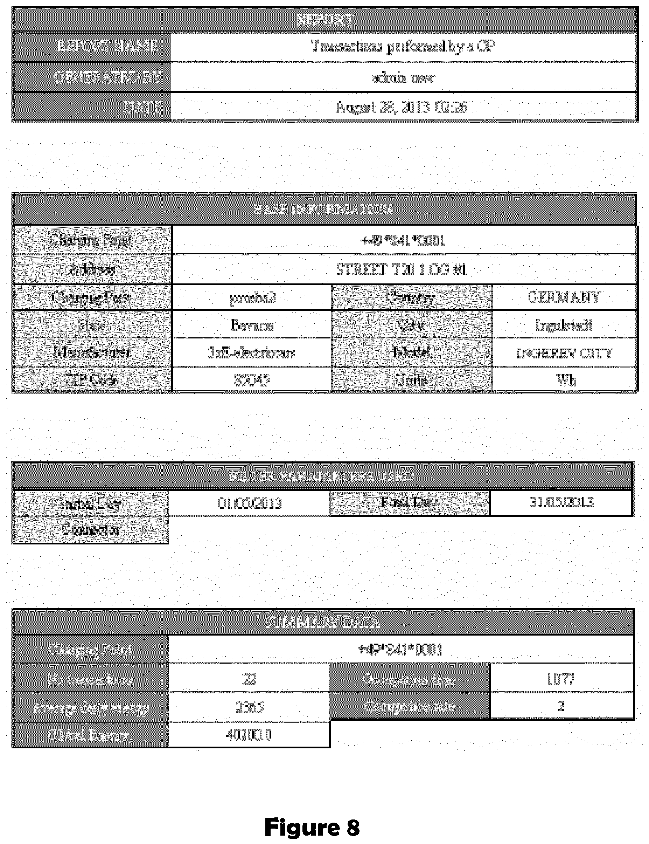

In some embodiments, the module «reports» (1e, figure 1) includes a predefined set of reports. They are related to the activity in the charging points, such as consumption, load profiles, etc. The features or functionalities provided by the module «reports» (1e) comprises:
- analyzing data and generating reports in order to provide tools to the operator for their organization and analysis (Load profile, events, maximum/minimum consumption, charging point's state and usage,...);
- providing flexible and customizable reports. The output includes classical formats such as PDF, Excel and others;
- support for decision-making by providing access to different tools that allow for retrieving only the information interesting a specific group;
- orientation of an end-user: any user can easily access the information regardless of their technical knowledge. Also, the management system shows the information in several ways (lists, summaries, and GIS, see for example figure 8);
- exporting bulk data.

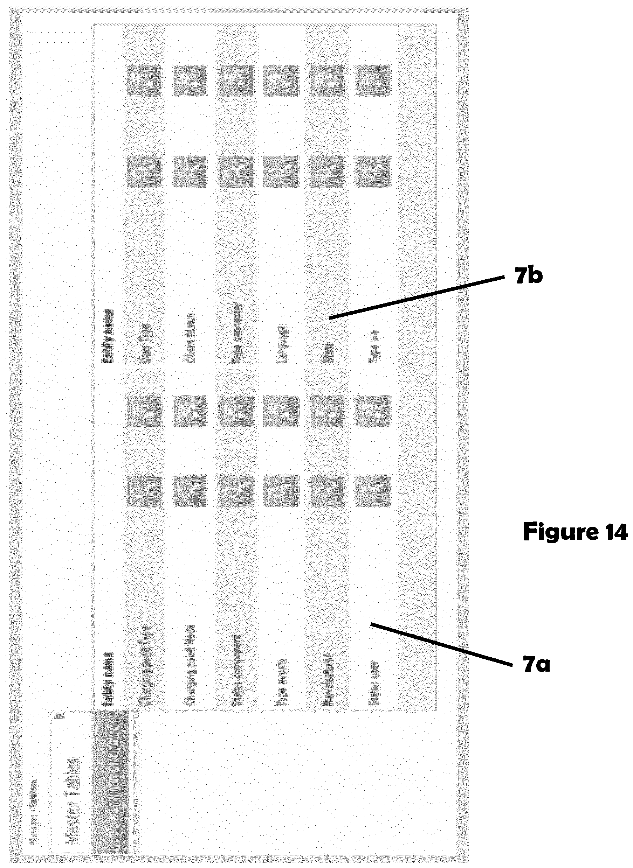

In some embodiments, the module «administration» (1f) includes a master table's management. These tables, for example 7a and 7b shown on figure 14, are necessary for the application configuration and the permissions definition along with their association with the different roles supported by the management system. Moreover, the functionalities of the module «administration» (1f) comprise defining of the internal events and the administrator's data management.

The module «administration» can provides features such as:
- a configuration of attributes that affect the system behavior and customize the final user interface. For example and without limitation, attributes such that «bookable» corresponding to a bookable charging points or «direct» corresponding to a charging point which is not able to be reserved or can be used for an efficient use of the system or the user interface;
- an administrator management to perform the classical operations such as create, read, update and delete;
- a management and configuration of:
   - a firmware to be send to a set of CPs. The CP (4) will upgrade its firmware with the new image (firmware) file;
   - a whitelist or the list of RFID cards to be send to a set of CPs (the list transfer may be full or differential, depending on the CP configuration);
   - a cluster and charging park by grouping the CPs (4).
- external CPO users: a CPO (5a, 5b) can delegate the CP (4) maintenance to users. The external CPO users only have access to a sub-set of the management system features.

In some embodiments, the management system can send a local authorization list that a charging point can use for authorization of the identity tags, idTags. The list may be either a full list to replace the current list in the charging point or it may be a differential list with updates to be applied to the current list in the charging point.

The management system shall send a SendLocalList.req PDU to send the list to a charging point. The SendLocalList.req PDU shall contain the type of update (full or differential) and the version number that the charging Point must associate with the local authorization list after it has been updated.

Upon receipt of a SendLocalList.req PDU, the charging point shall respond with a SendLocalList.conf PDU. The response PDU (Protocol Data Unit) shall indicate whether the charging point has accepted the update of the local authorization list. If the status is "Failed" or "VersionMismatch" and the updateType (meaning the type of update) was "Differential", then management system should retry sending the full local authorization list with updateType "Full".

From now on, a bookable charging point will be called «bookable» charging point (rCP) and a charging point which is not able to be reserved will be called «direct» charging point (dCP).

In some embodiments, the functionalities of the module «booking» comprise allowing the charging points operator (CPO) to switch the «direct» charging points (dCP) to «bookable» charging points (rCP).

The management system verifies that the bookings are not overlapped and that the user arrives at the expected timeframe of the booking. The management system creates internal events in order to track the booking steps and any unexpected incident or abnormal situation such as a user not identified within the timeframe.

The detailed booking information of each connector is shown at the "charging point detail" page.

In some embodiments, the architecture provides a set of web services with operations to exchange information with third party systems, for example and without limitation, a roaming services as Hubject or Ladenetz, billing systems as Kiwhi Pass or delegation of users (and their RFID cards) authorization to other legacy systems. The set of services, provided by the architecture, comprises a charge point service, a RFID check service, a session report service, a booking service, a booking report service and a whitelist service.

The charge point service can be accessed by any authorized external system that interacts with the architecture to request any information or to send direct orders to the CP (4). Operations to request information about the CP (4) comprise:
- get CP information: provides detailed CP information according to the input CP identifier;
- request CP status: provides the CP status according to the input CP identifier.
- search charging points by distance: takes into account the input GPS coordinates and the distance and returns all the CPs that are available within the ratio.

The architecture, by means of the charge point service, also allows real time operation integration with legacy systems, forwarding orders to the charging points (CP) such as:
- remote start transaction: this operation requests the remote start transaction. This action is useful for integrations with mobile applications;
- remote stop transaction: this operation requests the remote stop transaction. This action is useful for integrations with mobile applications;
- unlock socket: this operation requests the unlock socket operation.

The RFID check service is a web service, consumed by the management system that is published by an external system. Its usage and location is configurable. The configuration is at a CPO (5a, 5b) level.

If the local user authorization, inside the management system, is not activated, this web service is responsible to confirm if the users are authorized to start charging transactions.

The session report service, consumed by the management system, is also a web service that is published by an external system. This web service communicates to external systems the information related with the charging transactions flow:
- send the charge detail record (CDR) with the detailed information about the charging transaction (user, start, stop, CP, connector and consumption);
- send the status changes of the charging transaction (start, stop, progress, error).

The management system publishes the booking web service with the main booking operations in order to facilitate automated access to:
- book: this operation requests the scheduling of a new booking. The request can be accepted, rejected (providing a list of alternatives CP), or marked as concurrent because at that timeframe the RFID has another booking scheduled,
- update booking: this operation requests to update some data of a specific booking. The request can be accepted, rejected (providing a list of alternatives CP), or marked as concurrent because at that timeframe the RFID has another booking scheduled,
- cancel booking: this operation cancels a previous booking,
- search booking: this operation searchs a specific booking and get all the details,
- search bookings: this operations returns a list of bookings that accomplishes some specific criteria.

The booking report service, utilized by the management system, is a web service published by an external system. The configuration is at a CPO level. The management system uses this web service in order to notify all the status changes of the booking (booked, confirmed, error, canceled, expired, busy, completed, occupied).

The whitelist service is published by the management system in order to automate the whitelist distribution to the CPs. This Web Service receives a new whitelist of RFID cards and is responsible to distribute asynchronously this whitelist to all the CPs of the CPO network in background.

In some embodiments, the management system can issue a ReserveNow.req PDU to a charging point to book a connector for use by a specific idTag.

To request a booking the management system shall send a ReserveNow.req PDU to a charging point. The management system may specify a connector to be reserved. Upon receipt of a ReserveNow.req PDU, the charging point shall respond with a ReserveNow.conf PDU.

If the reservationId (identifier of the booking or reservation) in the request matches a booking in the charging point, then the charging point shall replace that booking or reservation with the new booking or reservation in the request.

If the reservationld does not match any booking in the charging point, then the charging point shall return the status value "ACCEPTED" if it succeeds in booking a connector. The charging point shall return "OCCUPIED" if the charging point or the specified connector is occupied. The charging point shall also return "OCCUPIED" when the charging point or connector has been reserved for the same or another idTag. The charging point shall return "FAULTED" if the charging point or the connector is in the faulted state. The charging point shall return "UNAVAILABLE" if the charging point or connector is in the unavailable state. The charging point shall return "REJECTED" if it is configured not to accept bookings.

If the charging point accepts the booking request, then it shall refuse charging for all incoming idTags on the booked connector, except when the incoming idTag or the parent idTag match the idTag or parent idTag of the booking.

When the configuration key "ReserveConnectorZeroSupported" is set to "TRUE", the charging point supports bookings on connector 0. If the connectorld in the booking request is 0, then the charging point shall not book a specific connector, but shall make sure that at any time during the validity of the booking, one connector remains available for the booked idTag. If the configuration key "ReserveConnectorZeroSupported" is not set or set to "FALSE", the charging point shall return "REJECTED".

If the parent idTag in the booking has a value (it is optional), then in order to determine the parent idTag that is associated with an incoming idTag, the charging point may look it up in its local authorization list or authorization cache. If it is not found in the local authorization list or authorization cache, then the charging point shall send an Authorize.req (authorization request) for the incoming idTag to the management system. The Authorize.conf response contains the parent-id (parent's identity).

A booking shall be terminated on the charging point when either: (i) a transaction is started for the booked idTag or parent idTag and on the booked connector or any connector when the booked connectorld is 0, or (ii) when the time specified in expiryDate (expiry period) is reached, or (iii) when the charging point or connector are set to "FAULTED" or "UNAVAILABLE".

If a transaction for the booked idTag is started, then charging point shall send the reservationId in the StartTransaction.req PDU (Start Transaction request) to notify the management system that the booking is terminated.

When a booking expires, the charging point shall terminate the booking and make the connector available. The charging point shall send a status notification to notify the management system that the booked connector is now available.

If charging point has implemented an authorization cache, then upon receipt of a ReserveNow.conf PDU the charging point shall update the cache entry, if the idTag is not in the local authorization list, with the IdTaglnfo (information concerning IdTag) value from the response as described under authorization cache.

In some embodiments, a charging point sends a heartbeat after a configurable time interval to let the management system know that a charging point is still connected.

The charging point shall send a Heartbeat.req PDU for ensuring that the management system knows that a charging point is still alive.

Upon receipt of a Heartbeat.req PDU, the management system shall respond with a Heartbeat.conf. The response PDU shall contain the current time of the management system, which is recommended to be used by the charging point to synchronize its internal clock.

The charging point may skip sending a Heartbeat.req PDU when another PDU has been sent to the management system within the configured heartbeat interval. This implies that a management system should assume availability of a charging point whenever a PDU has been received, the same way as it would have, when it received a Heartbeat.req PDU.

With JSON (JavaScript Objects Notation) over WebSocket, sending heartbeats is not mandatory. However, for time synchronization it is advised to at least send one heartbeat per 24 hour.

The management system, also, provides a set of features such as:
- an interoperability, the management system using standard communication protocols at its interfaces (web Services with the electromobility stakeholders and open charging point protocol (OCPP) with the CPs) to boost interoperability at all levels at with all the parties involved. The usage of standards avoids vendor lock-in and facilitates enterprise integration;
- a security ensured at different levels ranging from the use of TLS (transport layer security) to the use of digital certificates at the communications, encryption of sensitive data at the database and restricted access to information at the web front-end;
- a traceability to ensure that all the changes in the infrastructure and the critical messages will be stored, to ensure a complete rollback in case of error;
- a multilanguage function to ensures that the solution can be adapted to any language. That feature is applied at different levels: the front-end, the messages send to the end-user, logs, etc;
- an integration platform and gateway to manage and control the charging infrastructure;
- graphic and rich customer interfaces to provide a visual system, due to the vast amount of information generated, that allows seeing at a glance all the charging points' information in real-time (geolocation, state, alarms...) avoiding complex data searches;
- a software as a service (SaaS), the management system being offered as a SaaS to save costs and ensuring a complete functionality with a secure access to the information. A SaaS is a commercial software model in which said software is installed on remote servers rather than on a user's computer.

The management system may, also, include a validation process oriented towards the charging point manufacturers. This process enables manufacturers of charging points to prove the integration of their products with an open charging point control system such as the management system. Once integration has been verified, the charging point manufacturer will obtain a certificate proving the compatibility with the management system. This certification allows the use of a seal of the management system.

The validation process includes a series of activities to be performed by both parties in order to confirm correct integration between the two technology platforms (the management system and the charging points).

The present application describes various technical features and advantages with reference to the figures and/or various embodiments. Those skilled in the art will understand that the technical features of a given embodiment can in fact be combined with features of another embodiment unless explicitly stated otherwise, or unless the combination does not provide a solution to at least one of the technical problems mentioned in the present application. In addition, the technical features described in a given embodiment can be isolated from the other technical features of this embodiment unless explicitly stated otherwise.

It must be obvious to those skilled in the art that the present invention allows embodiments in many specific forms without departing from the field of application of the invention as claimed. Consequently, the present embodiments must be considered as illustrations, but can be modified in the area defined by the scope of the appended claims, and the invention must not be limited to the details given above.

## Claims

1. A module «booking» comprising computer-executable instructions for handling the booking process of at least a charging point of at least a charging point network managed by a system comprising at least a management server (2), at least a database (3) for storing information related to the charging points (4), of said network, at least a hardware and software architecture (1) comprising at least said module «booking» , said computer architecture (1) comprising at least a communication means (6a, 6b) for exchanging information with the charging point (4) and/or an external system and/or a user device or mobile, at least a memory for storing data and a processor for executing a program stored in the memory to implement the functionalities of at least the module «booking», said module being **characterized in that** said computer-executable code provides at least a communication interface, with an user interface comprising tools for allowing the user to choose remotely at least a type of connector corresponding to a given vehicle, and at least a communication with a charging point of the network of the operator (5a, 5b) infrastructure for receiving such information in the system and for proceeding to a booking in the network under the control of the management system.

2. A module «booking» according to claim 1, **characterized in that** the computer-executable instructions, on the server, enables the functionalities of:
• locking a connector within a charging point (4), in order to be used only by a specific identification card and for the booking timeframe;
or
• remotely locking a connector of a charging point (4), in order to be used only by the information contained on the user specific identification card for a booking timeframe, by means of a remote device or a remote communication interface, and then unlocking the chosen connector at the charging point (4) by the identification card used to lock said connector;

3. A module «booking» according to claim 1 or 2, **characterized in that** the computer-executable instructions triggers the following behavior: if the charging point accepts the booking request, then it shall refuse charging for all incoming idTags on the booked connector, except when an incoming idTag or a parent idTag match the idTag or parent idTag of the booking.

4. A module «booking» according to claim 1 or 2, **characterized in that** when ReserveConnectorZeroSupported parameter of a «charging point» module, is set to "TRUE" the charging point supports bookings on connector 0; if the connectorld in the booking request is 0, then the charging point shall not book a specific connector, but shall make sure that at any time during the validity of the booking, one connector remains available for the booked idTag.

5. A module «booking» according to claim 1 or 2, **characterized in that** according the computer-executable instructions, a booking shall be terminated on the charging point when either (i) a transaction is started for the booked idTag or parent idTag and on the booked connector or any connector when the booked connectorld is 0, or (ii) when the time specified in expiryDate is reached, or (ii) when the Charge Point or connector are set to "FAULTED" or "UNAVAILABLE".

6. A module «booking» according to claim 1 or 2, **characterized in that** the computer-executable instructions, enable management system to request a charging point to unlock a connector when the charging point shall send an UnlockConnector.req PDU.

7. A module «booking» according to claim 6, **characterized in that** after a call of the EV drivers to the CPO help-desk, an operator could manually trigger the sending of an UnlockConnector.req to the charging point, forcing a new attempt to unlock the connector.

8. A module «booking» according to claim 7, **characterized in that** computer-executable instructions provide that upon receipt of an UnlockConnector.req PDU, the charging point shall respond with a UnlockConnector.conf PDU; the response PDU shall indicate whether the charging point was able to unlock its connector; or if there was a transaction in progress on the specific connector, then charging point shall finish the transaction first.

9. A module «booking» according to claim 2 or 3 or 5 or 6, **characterized in that** it comprises computer-executable instructions for allowing the charging points operator (5a, 5b) to switch from the status «direct» charging points (4) to the status «-bookable» charging points (4).

10. A module «booking» according to claim 2 or 3 or 5 or 6, **characterized in that** it comprises computer-executable instructions for verifying that the bookings are not overlapped and that the user arrives at the expected timeframe of booking and, creating internal events in order to track the booking steps and any unexpected incident or abnormal situation.
